# EUROPEAN PATENT APPLICATION

(11) **EP 4 599 677 A1**
(43) Date of publication of application: **13.08.2025**
(21) Application number: 23874907.1
(22) Date of filing: 04.10.2023
(51) Int. Cl.: A01N 63/23, A01N 25/04, A01P 7/04

(54) **STABILIZED PEST CONTROL AGENT AND METHOD FOR PRODUCING SAID STABILIZED PEST CONTROL AGENT**

(30) Priority: 05.10.2022 JP 2022160697
(71) Applicant: Sumitomo Chemical Company, Limited, Tokyo 103-6020 (JP)
(72) Inventor: KATSUMOTO, Toshiyuki, Hamamatsu-shi, Shizuoka 431-2103 (JP); KAWASE, Hodaka, Hamamatsu-shi, Shizuoka 431-2103 (JP); ICHIKAWA, Naomi, Hamamatsu-shi, Shizuoka 431-2103 (JP); KATSUMA, Fumino, Hamamatsu-shi, Shizuoka 431-2103 (JP); YOSHINAGA, Masaru, Hamamatsu-shi, Shizuoka 431-2103 (JP); MORIKAWA, Yukino, Tokyo 103-0016 (JP); ANZAI, Masato, Hamamatsu-shi, Shizuoka 431-2103 (JP)
(74) Representative: Cabinet Beau de Loménie
(86) International application number: PCT/JP2023/036239
(87) International publication number: WO 2024/075782

(57) **Abstract**

The present invention is to provide a pest control agent in which Bacillus bacteria are diluted in advance with water to a prescribed concentration range (especially a spray concentration range), the pest control agent having improved storage stability. The present invention provides a pH-adjusted stabilized harmful organism control agent that comprises Bacillus bacteria, a pH adjusting agent, and water.

## Description

### TECHNICAL FIELD

This application claims priority to and the benefit of Japanese Patent Application No. 2022-160697 filed on October 5, 2022, the entire contents of which are incorporated herein by reference.

The present invention relates to harmful organism control agents. Particularly, the present invention relates to stabilized harmful organisms control agents comprising Bacillus bacteria, the control agents being stabilized with a pH adjusting agent.

### BACKGROUND ART

Bacillus bacteria includes live spores and produced crystalline toxin the genus Bacillus fungus. Strains showing a selective toxic to Lepidoptera, Diptera, or Coleoptera have been obtained, and they are widely used as insecticides and fungicides that are safe for humans and the environment (see Patent Document 1).

Bacillus bacteria are often traded and sold in powdered (granular) form or in a concentrated state. Then users who purchased them in this state need to dilute them with water to an aqueous dispersion of the appropriate concentration range before use. In this regard, particularly in a situation of home gardening, users rarely have a suitable scale for dilution or a measurable container, and even if they have a suitable scale or container, many users find it very troublesome to accurately dilute the product before spraying. There has been a demand for a pest control agent that can be purchased in a ready-to-use state that does not require a dilution and can be sprayed as is, even if it means increased transportation costs.

However, if the Bacillus bacteria are distributed after being diluted to the water-dispersion solution concentration range at the time of spraying, there is a problem that the decomposition of the Bacillus bacteria progresses over time during distribution and storage, making the control effect unstable and decreasing.

### CITATION LIST

### PATENT DOCUMENT

Patent Document 1: JP 2006-265230 A1

### SUMMARY OF THE INVENTION

### (PROBLEMS TO BE SOLVED BY INVENTION)

An object of the present invention is to provide a harmful organism control agent in which Bacillus bacteria are diluted in advance with water to a prescribed concentration range (especially a spray concentration range), the pest control agent having improved storage stability.

### (MEANS TO SOLVE PROBLEMS)

The present inventors have intensively studied the above problems considering the above situation, and found out that by adjusting pH of water-dispersion solution of Bacillus bacteria, even if an agent is diluted with water in advance to a concentration range suitable for dilution just before the use of spraying, especially a spray concentration range without dilution, provides a stabilized harmful organism control agent having improved storage stability, and then have completed the invention.

That is, the present invention can include the constitute aspects and embodiments indicated below, however which are not limited thereto.

### [Item 1]

A stabilized harmful organism control agent which comprises
Bacillus bacteria,
a pH adjusting agent, and
water,
wherein a pH of the agent is adjusted.

### [Item 2]

The stabilized harmful organism control agent according to Item [1], which consists of
Bacillus bacteria,
a pH adjusting agent, and
water.

### [Item 3]

The stabilized harmful organism control agent according to Item [1] or Item [2], wherein the pH of the agent is adjusted to a range of 4 or more to 10 or less.

### [Item 4]

The stabilized harmful organism control agent according to Item [1], which further comprises one or more non-ionic surfactants selected from the group consisting of polyoxyethylene hydrogenated castor oil ether, sorbitan fatty acid ester, and polyether-modified silicone.

### [Item 5]

The stabilized harmful organism control agent according to Item [1], which further comprises one or more ingredients of a reduced starch sugar.

### [Item 6]

The stabilized harmful organism control agent according to [1], which further comprises one or more the non-ionic surfactants selected from the group consisting of polyoxyethylene hydrogenated castor oil ether, sorbitan fatty acid ester, and polyether-modified silicone, and one or more ingredients of the reduced starch sugar.

### [Item 7]

The stabilized harmful organism control agent according to any one of Items [1] to [6], wherein Bacillus bacteria are within a range of 1.36 × 10⁶ CFU/g or more to 1.36 × 10⁹ CFU/g or less, relative to a total amount of the stabilized harmful organism control agent.

### [Item 8]

The stabilized harmful organism control agent according to any one of Items [1] to [7], wherein Bacillus bacteria are within a range of 0.001 % by mass or more to 1.0 % by mass or less, relative to a total amount of the stabilized harmful organism control agent.

### [Item 8-2]

The stabilized harmful organism control agent according to any one of Items [1] to [7], wherein Bacillus bacteria are within a range of 0.01 % by mass or more to 0.5 % by mass or less, relative to a total amount of the stabilized harmful organism control agent.

### [Item 9]

The stabilized harmful organism control agent according to any one of Items [1] to [8], wherein the Bacillus bacteria are BT (Bacillus thuringiensis).

### [Item 10]

The stabilized harmful organism control agent according to any one of Items [1] to [9], wherein the harmful organism is Lepidoptera larva.

### [Item 11]

The stabilized harmful organism control agent according to any one of Items [1] to [10], wherein the reduction ratio of the control effect after the storage at 40°C for one month is 50% or less.

### [Item 12]

The stabilized harmful organism control agent according to any one of Items [1] to [11], which is sprayed without diluting it.

### [Item 13]

A method for controlling a harmful organism, which comprises applying the stabilized harmful organism control agent according to any one of Items [1] to [11] filled in a hand spray container via spraying from a hand spray container to a plant or a harmful organism.

### [Item 14]

A method for stabilizing a harmful organism control agent which comprises an adjusting a pH of an agent to a range of 4 or more to 10 or less by adding a pH adjusting agent to the harmful organism control agent comprising Bacillus bacteria and water.

### [Item 15]

The stabilized harmful organism control agent according to any one of Items [1] to [11] which comprises one or more ingredients selected from Group (a) and Group (b):
Group (a): a group consisting of insecticidal ingredients, miticidal ingredients, and nematicidal ingredients; and
Group (b): fungicidal ingredients.

### [Item 16]

A method for controlling a harmful organism which comprises applying an effective amount of the stabilized harmful organism control agent according to any one of [1] to [11] to a harmful organism or a habitat where the harmful organism lives.

### [Item 17]

A seed or vegetative reproductive organ carrying an effective amount of the stabilized harmful organism control agent according to any one of Items [1] to [11].

### [Item 18]

A method for preparing a stabilized harmful organism control agent, which comprises
a step of adding a pH adjusting agent to a harmful organism control agent comprising Bacillus bacteria and water to adjust a pH of the agent to a range of 4 or more to 10 or less, to prepare a stabilized harmful organism control agent; and
a step of filling the stabilized harmful organism control into a container.

That is, a stabilized harmful organism control agent of the present invention (hereinafter, referred to as "present stabilized harmful organism control agent") is characterized by comprising Bacillus bacteria to be composed as an active ingredient, a pH adjusting agent that adjusts a pH of the stabilized harmful organism control agent to a range of 4 or more to 10 or less for a storage stability, and water.

The stabilized harmful organism control agent of the present invention may further comprise one or more non-ionic surfactant selected from the group consisting of polyoxyethylene hydrogenated castor oil ether, sorbitan fatty acid ester, and polyether-modified silicone, and/or one or more reduced starch sugar.

The above-mentioned Bacillus bacteria are preferably within a range of 1.36 × 10⁶ CFU/g or more to 1.36 × 10⁹ CFU/g or less, relative to a total amount of the above-mentioned stabilized harmful organism control agent.

The above-mentioned Bacillus bacteria are preferably within a range of 0.001 % by mass or more to 1.0 % by mass or less, relative to a total amount of the stabilized harmful organism control agent.

The above-mentioned Bacillus bacteria may be BT (Bacillus thuringiensis).

The stabilized harmful organism control agent of the present invention may consist of Bacillus bacteria as the above-mentioned active ingredient, the above-mentioned pH adjusting agent, and the above-mentioned water.

The above-mentioned pest may be Lepidoptera larva.

The reduction ratio of the control effect of the above-mentioned stabilized harmful organism control agent after the storage at 40°C for one month is preferably 50% or less, or 60% or less. The reduction ratio of the control effect represents a reduction ratio relative to the control effect of the case when a water-dispersion solution of Bacillus bacteria that is prepared just before the conduction of an evaluation test (hereinafter, may be referred to as "sample diluted just before") is used, and is expressed below.

Reduction ratio (%) of control effect after storage at 40°C for one month = (Control effect of sample diluted just before - Control effect after storage at 40°C for one month of stabilized harmful organism control agent) / Control effect of sample diluted just before × 100

The above-mentioned stabilized harmful organism control agent may be sprayed without dilution of it after a preparation.

A method for controlling harmful organism of the present invention may comprise spraying the above-mentioned stabilized harmful organism control agent without dilution of it after a preparation.

The above-mentioned stabilized harmful organism control agent of the present invention may be filled in a hand spray container, and applied it via spraying from the hand spray container to plants or harmful organisms.

The stabilization of the harmful organism control agent can be achieved by a step of adding a pH adjusting agent to a harmful organism control agent comprising Bacillus bacteria and water to adjust a pH of the agent to a range of 4 or more to 10 or less.

The stabilized harmful organism control agent of the present invention may comprise one or more ingredients selected from the group consisting of any other pesticides or any other fungicides other than Bacillus bacteria, which may be used as the stabilized harmful organism control agent

The method for controlling harmful organisms of the present invention may comprise applying an effective amount of the stabilized harmful organism control agent to harmful organisms or habitats where the harmful organisms live.

As an example of the aspect of the present invention, seeds or vegetative reproductive organs carrying an effective amount of the stabilized harmful organism control agent of the present invention are included.

A method for preparing the stabilized harmful organism control agent of the present invention is characterized by comprising a step of composing a pH adjusting agent to a harmful organism control agent comprising Bacillus bacteria and water to adjust a pH of the agent to a range of 4 or more to 10 or less to prepare a stabilized harmful organism control agent, and a step of filling the above-mentioned stabilized harmful organism control agent to a container.

### [EFFECT OF INVENTION]

According to the present invention, it is possible to provide a stabilized harmful organism control agent in which Bacillus bacteria have been diluted in advance with water to a prescribed concentration range (especially a spray concentration range) and which has improved storage stability throughout the distribution and storage processes.

Furthermore, since the stabilized harmful organism control agent is pre-diluted to a prescribed concentration range (especially a spray concentration range), a user can spray the stabilized harmful organism control agent by simply diluting it appropriately without having to take the time to accurately dilute it using a scale, a weighable container, or the like, or the user can spray the stabilized harmful organism control agent as is, without taking the time to dilute it.

The present invention can also provide a harmful organism control agent in which Bacillus bacteria are diluted in advance with water to a prescribed concentration range (especially a spray concentration range), the pest control agent having improved storage stability.

The present invention can further provide a stabilized harmful organism control agent that is used to control harmful organisms.

### BRIEF DESCRIPTION OF DRAWINGS

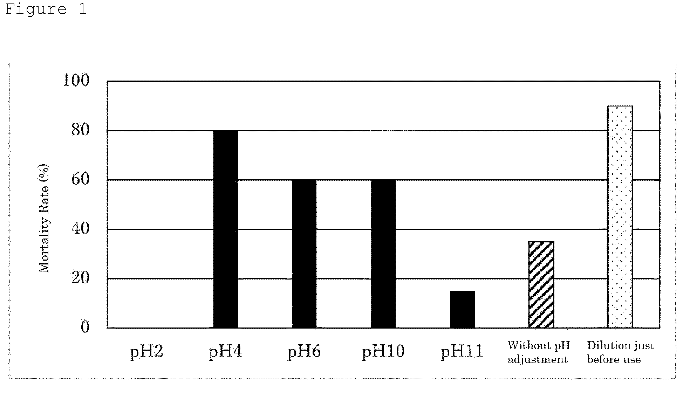

[Figure 1] Figure 1 is a graph showing a mortality ratio per adjusted pH in Evaluation Test Example 1.

### MODE FOR CARRYING OUT THE INVENTION

Embodiments of the present invention are explained specifically below.

### (Stabilized harmful organism control agent)

The stabilized harmful organism control agent of the present invention represents an agent for controlling harmful organisms in which the agent is conducted by a storage stabilization.

The stabilized harmful organism control agent of the present invention comprises Bacillus bacteria as an active ingredient. The stabilized harmful organism control agent of the present invention comprises further a pH adjusting agent that adjusts a pH of the stabilized harmful organism control agent for a storage stabilization and water.

### (Bacillus bacteria)

Bacillus bacteria are eubacteria that is classified into Firmicutes Bacillus class, Bacillus order, Bacillus family, and includes live spores, and/or inactivated spores, and/or produced crystal toxins of fungus such as Bacillus subtilis, Bacillus cereus, Bacillus anthracis, and Bacillus thuringiensis

The Bacillus bacteria are spore-forming bacteria, and spores germinate under prescribed condition, and cell division is repeated to form live spores and crystalline protein. When harmful organisms (pests) eat the crystalline protein, the crystalline protein is dissolved and decomposed by alkaline digestive fluids to form a crystalline toxin. Further, the live spores germinate under prescribed condition and invade to a pest. By these mechanisms, the harmful organisms are died finally.

Here even if a human in which digestive fluids are acidic eats the crystalline protein, the crystalline protein is not decomposed, and a toxin is then not formed. Also, the crystalline protein does not show toxicity against plants in which any mechanisms such as digestive fluids are not included.

The concentration of Bacillus bacteria is not particularly limited unless the mortality ratio of harmful organism is beyond a particular constant ratio, and is preferably, in a range of 1.36 × 10⁶ CFU (Colony Forming Unit) /g or more to 1.36 × 10⁹ CFU / g or less, relative to a total amount of the stabilized harmful organism control agent. When the concentration of Bacillus bacteria is less than 1.36 × 10⁶ CFU/g, the control effects against harmful organisms may be sometimes reduced. Also, when the concentration of Bacillus bacteria is more than 1.36 × 10⁹ CFU/g, the problem of raw material costs, or the problems of risks of occurrence of drug damage or difficulty in spraying due to high viscosity change are happened.

Also, when it is expressed with % by mass, the concentration of Bacillus bacteria is preferably within a range of 0.001 % by mass or more to 1.0 % by mass or less, more preferably within a range of 0.05 % by mass or more to 0.5 % by mass or less, relative to a total amount of the stabilized harmful organism control agent, and for example, includes 0.1 % by weight, however, the concentration of Bacillus bacteria is not limited thereto.

Among Bacillus bacteria, Bacillus thuringiensis (hereinafter, referred to as "BT") is more preferably included. The BT agent may use commercially available products, such as ZENTARI Water dispersible granule (WDG) (manufactured by Sumitomo Chemical Co, Ltd.), and may be any agents in which the live spores and the crystalline proteins obtained by any methods such as a culture are composed.

### (PH Adjusting agent)

The pH adjusting agent used in the present invention is an agent that adjusts a pH of the above-mentioned stabilized harmful organism control agent for a storage stabilization.

The pH adjusting agent used in the present invention has a buffer action against a hydrogen ion concentration, and suppresses a change of the pH due to a change of an acid or a base in solution or a change of the concentration. In general, it may be a mixture of weak acid and conjugate base, or a mixture of weak base and conjugate acid, and includes, for example, citric acids (citric acid + sodium citrate or potassium citrate (such as trisodium citrate, tripotassium citrate), acetic acids (acetic acid + sodium acetate or potassium acetate), phosphoric acids (phosphoric acid + sodium phosphate or potassium phosphate (such as trisodium phosphate, tripotassium phosphate), or, boric acids, tartaric acids, malic acids, fumaric acids, succinic acids, adipic acids, or Tris hydrochlorides, or salts thereof. Also, examples of the pH adjusting agent include hydrochloric acid, sodium hydroxide, or potassium hydroxide and the others.

The pH adjusting agent used in the present invention can be decided its adjustable ranges of pH by adjusting the kinds of acid or base and the composed ratio of acid or the base.

The pH adjusting agent used in the present invention is preferably adjusted the pH of the stabilized harmful organism control agent to a range of 4 or more to 10 or less. In the case where the pH is made be too low or too high, the Bacillus bacteria cannot be stabilized, and the decomposition thereof proceeds during a storage and the control ratio is likely to be reduced.

The pH adjusting agent used in the present invention is composed by the ratio thereof leading to the prescribed pH, and the concentration thereof is preferably within 1 mM to 1000 mM, more preferably 1 mM to 100 mM, and further preferably 1 mM to 40 mM. When the concentration thereof is below 1 mM, the effect of suppressing the change of pH is made be decreased, and the storage stability of the stabilized harmful organism control agent is reduced. Also, when the concentration thereof is beyond 1000 mM, the drug damage to plants is likely to be happened, which also become a factor of lowering an economic efficiency.

### (Water)

As examples of water, tap water, ion-exchanged water, distilled water, filtered water, sterilized water, ground water and the like are used. In preparing the stabilized harmful organism control agent, ion-exchanged water, distilled water, filtered water, or sterilized water are used, or in distilling just before the use, the stabilized harmful organism control agent, tap water or ground water may be used.

### (Harmful Organisms)

Harmful organisms to be controlled may be those that can be controlled with Bacillus bacteria, and are not limited unless otherwise indicated, and include, for example, larvae of pests such as Lepidoptera larva (Plutellidae, Papilionoidea Latreille, cutworms (Noctuidae) (such as cotton worm (Spodoptera litura)), Limacodidae, hairy caterpillars, Arctiidae (such as American white moth (Hyphantria cunea)), Lymantriidae, Tortricidae, Sesiidae, Noctuidae moths (or Xyleninae moths), Geometridae, fruit borers, stem borers, Pyraustinae, Heliothinae, Psychidae, cutworms), Scarabaeidae larva, Leaf beetle larva), Diptera larva.

Organisms on which the stabilized harmful organism control agent of the present invention can exert its control efficacy include a silkworm as Lepidoptera larva.

### (Plants to be targeted)

The plants to be controlled may be plants in which the above-mentioned harmful organisms are occurred, and is not limited unless otherwise indicated. Examples of the plants include morning glory, aster, impatiens, carnation, gerbera, gazania, campanula, balloon flower, chrysanthemum, calendula, gloxinia, cockscomb, Iceland poppy, cosmos, Primula, Salvia, zinnia, gypsophila, sweet pea, statice, stock, pansy, delphinium, Eustoma, sunflower, begonia, Petunia, gentian, lupin, cyclamen, dahlia, tulip, hydrangea, rose, peony, kidney beans, tomato, cherry tomato, eggplant, bell pepper, cucumber, watermelon, melon, pumpkin, bitter melon, strawberry, Chinese cabbage, cabbage, Japanese mustard spinach, pak choi, garland chrysanthemum, okra, perilla, spinach, peas, fava beans, corn, radish, turnip, carrot, burdock, scallion, onion, asparagus, potato, sweet potato, taro, and the others.

A vegetative reproduction organ means a part of plant such as root, stem, and leaf which has a growth capability even when said part is separated from the plant body and placed into soil. Examples of the vegetative reproduction organ include tuberous root, creeping root, bulb, corm or solid bulb, tuber, rhizome, stolon, rhizophore, cane cuttings, propagule, and vine cutting. Stolon is also referred to as "runner", and propagule is also referred to as "propagulum" and categorized into broad bud and bulbil. Vine cutting means a shoot (collective term of leaf and stem) of sweet potato, glutinous yam, or the like. Bulb, corm or solid bulb, tuber, rhizome, cane cuttings, rhizophore, and tuberous root are also collectively referred to as **"bulb".** For example, cultivation of potato starts with planting a tuber into soil, and the tuber to be used is generally referred to as "seed potato".

### (Other ingredients)

As other ingredients, one or more agents selected from the group consisting of surfactants, reduced starch sugar, antifreezing agent, preservative agent, thickener and the others may be optionally comprised.

Also, in the stabilized harmful organism control agent of the present invention, one or more ingredients (hereinafter, referred to as Present ingredients) selected from the group consisting of any other insecticides other than Bacillus bacteria and any other fungicides may be comprised

Examples of the present ingredients include one or more ingredients selected from the following Group (a) and Group (b).

Examples of Group (a) include insecticidal active ingredients, miticidal active ingredients, and nematicidal active ingredients selected from the group consisting of the followings: acetylcholinesterase inhibitors (for example, carbamate insecticides and organophosphate insecticides), GABA-gated chloride channel blockers (for example, phenylpyrazole insecticides), sodium channel modulators (for example, pyrethroid insecticides), nicotinic acetylcholine receptor competitive modulators (for example, neonicotinoid insecticides), nicotinic acetylcholine receptor allosteric modulators, glutamate-gated chloride channel allosteric modulators (for example, macrolide insecticides), juvenile hormone mimics, multisite inhibitors, chordotonal organ TRPV channel modulators, mite growth inhibitors, microbial disruptors of insect midgut membranes, inhibitors of mitochondrial ATP synthase, uncouplers of oxidative phosphorylation, nicotinic acetylcholine receptor channel blockers (for example, nereistoxin insecticides), inhibitors of chitin biosynthesis, moulting disruptors, ecdysone receptor agonists, octopamine receptor agonists, mitochondrial complexes I, II, III, and IV electron transport inhibitors, voltage-dependent sodium channel blockers, inhibitors of acetyl CoA carboxylase, ryanodine receptor modulators (for example, diamide insecticides), chordotonal organ modulators, and microbial insecticides, and other insecticidal active ingredients, miticidal active ingredients, and nematicidal active ingredients.

These ingredients are described in the classification on the basis of action mechanism by IRAC.

Examples of Group (a) include fungicidal ingredients selected from the group consisting of the followings: nucleic acids synthesis inhibitors (for example, phenylamide fungicides and acylamino acid fungicides), cell division and cytoskeleton inhibitors (for example, MBC fungicides), respiration inhibitors (for example, QoI fungicides, and QiI fungicides), amino acids synthesis and protein synthesis inhibitors (for example, anilino-pyrimidine fungicides), signal transduction inhibitors, lipid synthesis and membrane synthesis inhibitors, sterol biosynthesis inhibitors (for example, DMI fungicides such as triazole fungicides), cell wall biosynthesis inhibitors, melanin synthesis inhibitors, plant defense inducers, fungicides with multi-site contact activity, microbial fungicides, and other fungicidal active ingredients.

These ingredients are described in the classification on the basis of action mechanism by FRAC.

In contrast, the stabilized harmful organism control agent of the present invention may be the form not containing the other ingredients, which consists of only Bacillus bacteria, a pH adjusting agent, and water.

Examples of surfactants used in the present invention include particularly non-ionic surfactants. Examples of the surfactants include alkyl ether type of non-ionic surfactant, alkylamino ether type of non-ionic surfactant, aryl phenyl ether type of non-ionic surfactant, aliphatic acid ether ester type of non-ionic surfactant, vegetable oil ether ester type of non-ionic surfactant, sorbitan fatty acid ester type of non-ionic surfactant, sorbitan ether ester type of non-ionic surfactant, and the others. Specific examples thereof include polyoxyethylene (POE) hydrogenated castor oil ether, sorbitan oleic acid ester, sorbitan lauric acid ester, lauric acid polyglyceryl, polyoxyalkylene aryl phenyl ether, polyoxyethylene alkyl ether, polyoxyethylene alkyl phenyl ether, polyoxyethylene aryl phenyl ether, polyoxyethylene styryl phenyl ether, polyoxyethylene alkyl phenyl ether formaldehyde condensate, polyoxyethylene polyoxypropylene block polymer, polyoxyethylene polyoxypropylene block polymer alkyl phenyl ether, polyoxyethylene sorbitan fatty acid ester, polyoxyethylene castor oil ether, polyethylene glycol aliphatic acid ester, polyether-modified silicone and the others. Examples of the product name of the surfactants include NEWKALGEN D230K (another name: TAKESURF D-230K) (manufactured by TAKEMOTO OIL & FAT CO., LTD.) (containing polyoxyethylene (POE) hydrogenated castor oil ether), NEWKALGEN D240K (another name: TAKESURF D-240K), (manufactured by TAKEMOTO OIL & FAT CO., LTD.) (containing polyoxyethylene (POE) hydrogenated castor oil ether), NEWKALGEN D260K (another name: TAKESURF D-260K) (manufactured by TAKEMOTO OIL & FAT CO., LTD.) (containing polyoxyethylene (POE) hydrogenated castor oil ether), NEWKALGEN D931 (another name: TAKESURF D-931) (manufactured by TAKEMOTO OIL & FAT CO., LTD.) (containing sorbitan lauric acid ester), NEWKALGEN D935 (another name: TAKESURF D-935) (manufactured by TAKEMOTO OIL & FAT CO., LTD.) (containing sorbitan oleic acid ester), NEWKALGEN D935-T (another name: TAKESURF D-935-TT (manufactured by TAKEMOTO OIL & FAT CO., LTD.) (containing sorbitan trioleic acid ester), NEWKALGEN D941 (another name: TAKESURF D-941) manufactured by TAKEMOTO OIL & FAT CO., LTD.) (containing polyoxyethylene sorbitan lauric acid ester), NEWKALGEN D945 (another name: TAKESURF D-945) (manufactured by TAKEMOTO OIL & FAT CO., LTD.) (containing polyoxyethylene sorbitan oleic acid ester), SUNSOFT A-121E (manufactured by Taiyo kagaku Co. Ltd.) (containing lauric acid polyglyceryl), SILFACE SAG002 (manufactured by Nissin Chemical Industry Co., Ltd.) (containing polyether-modified silicone) and the others.

Also, as a surfactant, anionic surfactants, and cationic surfactants may be also used.

Examples of the anionic surfactants include each salt of sodium, calcium or ammonium of alkyl sulfate, polyoxyethylene alkyl ether sulfate, polyoxyethylene alkyl phenyl ether sulfate, polyoxyethylene benzyl (or styryl) phenyl ether sulfate, or polyoxyethylene polyoxypropylene block polymer sulfate respectively; each salt of sodium, calcium, ammonium or alkanolamine of alkyl sulfonate, dialkyl sulfosuccinate, alkyl benzene sulfonic acid (such as calcium dodecyl benzene sulfonate), mono- or di- alkyl naphthalenate sulfonate, naphthalene sulfonic acid formaldehyde condensate, lignin sulfonic acid, polyoxyethylene alkyl phenyl ether sulfonic acid, or polyoxyethylene alkyl phenyl ether sulfosuccinate respectively; each salt of sodium or calcium of polyoxyethylene alkyl ether phosphate, polyoxyethylene mono- or di- alkyl phenyl ether phosphate, polyoxyethylene benzene (or styryl) phenyl ether phosphate or polyoxyethylene polyoxypropylene block polymer phosphate, and the others.

Examples of cationic surfactants include alkyl trimethyl ammonium salt, dialkyl dimethyl ammonium salt, polyoxyethylene alkyl amine salt, polyoxypropylene alkyl amine salt, dialkyl amine salt derivatives, alkyl benzyl dimethyl ammonium salt, dialkyl monomethyl hydroxyethyl ammonium propionate, and the others.

The above-mentioned surfactants may be used alone, or may be used by two or more surfactants in combination.

Also, a reduced starch sugar may be comprised in combination with the surfactants, or instead of the surfactants.

The reduced starch sugar used in the present invention represents a product that is prepared by the following procedures: the saccharified liquid produced by partially hydrolyzing starch liquefied with α-amylase or sugars using enzymes such as β-amylase is prepared by catalytic reduction under hydrogen pressure using a known method.

Examples of the reduced starch sugar used in the present invention include reduced starch sugar, or reduced starch sugar that is commercially available for food or for usual use as a name of reduced maltose syrup.

The above-mentioned reduced starch sugar may be used alone as one ingredient of the reduced starch sugar, or may be used as two or more ingredients of the reduced starch sugar in combination.

As examples of antifreezing agent, solvent having low boiling point, for example, alcoholic solvents (such as ethanol, ethyleneglycol, propylene glycol, ethyl cellosolv, butyl carbitol, and 3-methyl-methoxybutanol) can be used. As ethanol, undenatured ethanol (which does not add by isopropanol and the like) can be used, and examples of the undenatured ethanol include 95 degree undenatured ethanol (manufactured by Japan Alcohol Trading Co., Ltd.), and 99 degree undenatured ethanol (manufactured by Japan Alcohol Trading Co., Ltd.). When ethanol is used, the undenatured ethanol is more preferably included.

Examples of the preservative agent include isothiazoline system compounds such as benzyl alcohol mono(poly) hemi formal, 1,2-benzisothiazoline-3-one, 5-chloro-2-methyl-4-isothiazoline-3-one, and 2-methyl-4-isothiazoline-3-one; 2-bromo-2-nitropropane-1,3-diol, sodium benzoate, potassium sorbate, sodium dehydroacetate, parachloro meta-xylenol, and 2,6-dimethylphenol, and the others.

Examples of the thickener include polyvinylpyrrolidone, xanthan gum, polyvinyl alcohol, guar gum, carboxyvinyl polymer, and the others.

### (Method for preparing stabilized harmful organism control agent)

The method for preparing the stabilized harmful organism control agent of the present invention comprises a step of composing a pH adjusting agent to a harmful organism control agent comprising Bacillus bacteria and water to adjust a pH of the agent to a range of 4 or more to 10 or less to prepare the stabilized harmful organism control agent, and a step of filling the above-mentioned stabilized harmful organism control agent to a container.

It is preferable that the container is a hand spray container so that it can be sprayed as itself directly from the container.

When the stabilized harmful organism control agent of the present invention is as necessary diluted with water just before spray use, it may be diluted by several times to several tens of times, for example, two to ten times, relative to the volume ratio of the stabilized harmful organism control agent of the present invention.

### (Harmful organisms-control method using stabilized harmful organism control agent)

The method of controlling harmful organisms of the present invention is conducted by applying an effective amount of the stabilized harmful organism control agent of the present invention to harmful organism directly, and/or a habitat where the harmful organisms live (such as plants, soil, indoor, animals, and the others). Also, the method can be applied to seeds. Examples of the method of controlling harmful organisms include foliage treatment (foliage spray), soil treatment (soil spray), root treatment, shower treatment and seed treatment.

The applied timing of the stabilized harmful organism control agent of the present invention may be decided depending on the occurrence situation, and examples of the applied timing include the timing before occurrence of the harmful organisms, or the timing of the beginning of the occurrence.

### EXAMPLES

Hereinafter, the present invention is explained in more detail by Preparation Examples, and Evaluation Examples (including Specific Preparation Examples, and Test Examples), however, the present invention should not be limited to these Examples.

### (Preparation Examples)

The stabilized harmful organism control agent of the present invention is prepared by mixing Bacillus bacteria (such as ZENTARI Water dispersible granule (manufactured by Sumitomo Chemical Co, Ltd.)), appropriate amount of water, a necessary amount for adjusting pH to a prescribed pH of a pH adjusting agent, and as necessary (optically), one or more agents selected from surfactants, reduced starch sugar, antifreezing agent, preservative agent, or thickener, and/or one or more ingredients selected from any other insecticides other than Bacillus bacteria or any other fungicides and the others.

### (Evaluation Tests)

Hereinafter, Evaluation Test Examples of the present invention are specifically described, however the present invention is not limited to these Evaluation Test Examples.

The following reagents were used in the evaluation test.

### Bacillus Bacteria (BT Agent)

### Bacillus thuringiensis

ZENTARI Water dispersible granule (active igredient 10%) (manufactured by Sumitomo Chemical Co, Ltd.)

### pH Buffer Agent

### citric acid - hydrate

Industrial use citric acid (manufactured by Showa Kako **Co.,** Ltd.)

### citric acid tripotassium - hydrate

Industrial use tripotassium (manufactured by Showa Kako **Co.,** Ltd.)
hydrochloric acid (manufactured by FUJIFILM Wako Pure Chemical Corporation)
sodium hydroxide (manufactured by FUJIFILM Wako Pure Chemical Corporation)

### Surfactants

polyoxyethylene hydrogenated castor oil ether
   NEWKALGEN D230K (manufactured by TAKEMOTO OIL & FAT CO., LTD.)
sorbitan lauric acid ester
   NEWKALGEN D931 (manufactured by TAKEMOTO OIL & FAT **CO.,** LTD.)
· polyether-modified silicone
   SILFACE SAG002 (manufactured by Nissin Chemical Industry Co., Ltd.)

### Reduced Starch Sugar

· reduced starch sugar

### Water

ion-exchanged water

### Evaluation Test Example 1

### Silkworm

The insecticidal activity was examined on the silkworm, as an example of Lepidoptera larva.

### (Preparation Examples)

The samples examined in Evaluation Test Example 1 were prepared as follows.

A sample 1 was prepared by mixing 0.5 g of ZENTARI Water dispersible granule, 450 g of water, and 1.4762 g of hydrochloric acid as a pH adjusting agent to adjust a pH to 2, and then adding water to make finally a total weight of 500 g. The mixture was then stored at 40°C for one month.

A sample 2 was prepared by mixing 0.5 g of ZENTARI Water dispersible granule, 450 g of water, 0.788 g of citric acid as a pH adjusting agent, and 0.6381 g of tripotassium citrate to adjust a pH to 4, and then adding water to make finally a total weight of 500 g. The mixture was then stored at 40°C for one month.

A sample 3 was prepared by mixing 0.5 g of ZENTARI Water dispersible granule, 450 g of water, 0.2058 g of citric acid as a pH adjusting agent, and 1.4483 g of tripotassium citrate to adjust a pH to 6, and then adding water to make finally a total weight of 500 g. The mixture was then stored at 40°C for one month.

A Sample 4 was prepared by mixing 0.5 g of ZENTARI Water dispersible granule, 450 g of water, and 0.0443 g of sodium hydroxide as a pH adjusting agent to adjust a pH to 10, and then adding water to make finally a total weight of 500 g. The mixture was then stored at 40°C for one month.

A sample 5 was prepared by mixing 0.5 g of ZENTARI Water dispersible granule, 450 g of water, and 0.0878 g of sodium hydroxide as a pH adjusting agent to adjust a pH to 11, and then adding water to make finally a total weight of 500 g. The mixture was then stored at 40°C for one month.

A sample 6 was prepared by composing only 0.5 g of ZENTARI Water dispersible granule and 499.5 g of water, and the mixture was then stored at 40°C for one month.

A sample 7 was prepared by diluting 0.5 g of ZENTARI Water dispersible granule with 499.5 g of water just before use. Although the pH of the sample 7 was not adjusted, the pH was 5.81.

### (Test Examples)

Each of the samples (samples 1 to 7) prepared above was evaluated for insecticidal activity against silkworms.

Each sample was diluted 5.62 times with ion-exchanged water. Zero point five (0.5) mL of the sample liquid was added to 10 g of food (Silkmate M50S, manufactured by Nosan Corporaton) and mixed well. Ten (10) silkworms were released into the mixture and allowed to stand in an incubator. This procedure was repeated twice (a total of 20 insects). After 72 hours of the release, the food was replaced with food that did not contain the sample, and the silkworms were allowed to stand for another 48 hours. The mortality rate (%) was calculated from the number of dead insects after a total of 120 hours. The test was conducted at 25°C under 14 hours of light condition and 10 hours of darkness condition.

The evaluation test results are shown in Table 1 and Figure 1.

**[Table 1]**

| Samp. No. | Samp. 1 | Samp. 2 | Samp. 3 | Samp. 4 | Samp. 5 | Samp. 6 | Samp. 7 |
|---|---|---|---|---|---|---|---|
| pH | pH2 | pH4 | pH6 | pH10 | pH11 | Without pH adjustment | Dilution just before use |
| Number of dead insects | 0 | 16 | 12 | 12 | 3 | 7 | 18 |
| Mortali ty rate (%) | 0 | 80 | 60 | 60 | 15 | 35 | 90 |

As can be seen from Table 1 and Figure 1, the mortality rate of the sample 7, which was diluted just before use, was 90%, whereas the mortality rate of the sample 6, which was without pH adjustment and was stored at 40°C for one month, reduced to 35%.

In contrast, it was found that the mortality rates of the sample 2 with a pH 4 to the sample 4 with a pH 10 were all greater than that of the sample 6 without pH adjustment. In other words, it was found that a harmful organism control agent containing BT as an active igredient can achieve a storage stabilization by adjusting the pH.

### (Preparation Examples)

The samples examined in Evaluation Test Examples 2 and 3 were prepared as follows.

### Sample 8

Five (5) g of ZENTARI Water dispersible granule was added to 4,500 g of water and mixed to obtain a mixture. Next, citric acid was added as a pH adjusting agent to the mixture in an amount (3.67 g) to adjust the pH to 3, and mixed, and water was added to make finally a total weight of 5,000 g to prepare a harmful organism control agent. The obtained harmful organism control agent was filled into a hand spray container and stored at 40°C for one month to obtain a sample 8.

### Sample 9

Five (5) g of ZENTARI Water dispersible granule was added to 4,500 g of water and mixed to obtain a mixture. Next, citric acid was added as a pH adjusting agent to the mixture in an amount (0.36 g) to adjust the pH to 4, and mixed, and water was added to make finally a total weight of 5,000 g to prepare a harmful organism control agent. The obtained harmful organism control agent was filled into a hand spray container and stored at 40°C for one month to obtain a sample 9.

### Sample 10

Five (5) g of ZENTARI Water dispersible granule was added to 4,500 g of water and mixed to obtain a mixture. Next, sodium hydroxide was added as a pH adjusting agent to the mixture in an amount (0.15 g) to adjust the pH to 10, and mixed, and water was added to make finally a total weight of 5,000 g to prepare a harmful organism control agent. The obtained harmful organism control agent was filled into a hand spray container and stored at 40°C for one month to obtain a sample 10.

### Sample 11

Five (5) g of ZENTARI Water dispersible granule was added to 4,500 g of water and mixed to obtain a mixture. Next, sodium hydroxide was added as a pH adjusting agent to the mixture in an amount (0.39 g) to adjust the pH to 11, and mixed, and water was added to make finally a total weight of 5,000 g to prepare a harmful organism control agent. The obtained harmful organism control agent was filled into a hand spray container and stored at 40°C for one month to obtain a sample 11.

### Sample 12

Zero point one eight seven (0.187) g (which was an appropriate amount so that the fungus count of Bacillus thuringiensis was 1.36 x 10⁶ CFU/g) of ZENTARI Water dispersible granules was added to 4,500 g of water, and mixed to obtain a mixture. Next, citric acid was added as a pH adjusting agent to the mixture in an amount (0.10 g) to adjust the pH to 4, and then mixed, and water was added to finally a total weight of 5000 g to prepare the harmful organism control agent of the present invention. The obtained harmful organism control agent was filled into a hand spray container. It was stored at 40°C for one month to obtain a sample 12.

### Sample 13

One hundred eighty and seven (187) g (which was an appropriate amount so that the fungus count of Bacillus thuringiensis was 1.36 x 10⁹ CFU/g) of ZENTARI Water dispersible granules was added to 4,500 g of water, and mixed to obtain a mixture. Next, citric acid was added as a pH adjusting agent to the mixture in an amount (7.03 g) to adjust the pH to 4, and then mixed, and water was added to finally a total weight of 5000 g to prepare the harmful organism control agent of the present invention. The obtained harmful organism control agent was filled into a hand spray container. It was stored at 40°C for one month to obtain a sample 13.

### Sample 14

Five (5) g of ZENTARI Water dispersible granule and 5 g of NEWKALGEN D230K were added to 4500 g of water and mixed to obtain a mixture. Next, citric acid was added as a pH adjusting agent to the mixture in an amount (0.39 g) to adjust the pH to 4, and mixed, and water was added to make finaly a total weight of 5000 g to prepare a harmful organism control agent of the present invention. The obtained harmful organism control agent was filled into a hand spray container and stored at 40°C for one month to obtain a sample 14.

### Sample 15

Five (5) g of ZENTARI Water dispersible granule and 5 g of NEWKALGEN D931 were added to 4500 g of water and mixed to obtain a mixture. Next, citric acid was added as a pH adjusting agent to the mixture in an amount (0.39 g) to adjust the pH to 4, and mixed, and water was added to make finaly a total weight of 5000 g to prepare a harmful organism control agent of the present invention. The obtained harmful organism control agent was filled into a hand spray container and stored at 40°C for one month to obtain a sample 15.

### Sample 16

Five (5) g of ZENTARI Water dispersible granule and 5 g of SILFACE SAG002 were added to 4500 g of water and mixed to obtain a mixture. Next, citric acid was added as a pH adjusting agent to the mixture in an amount (0.40 g) to adjust the pH to 4, and mixed, and water was added to make finaly a total weight of 5000 g to prepare a harmful organism control agent of the present invention. The obtained harmful organism control agent was filled into a hand spray container and stored at 40°C for one month to obtain a sample 16.

### Sample 17

Five (5) g of ZENTARI Water dispersible granule and 30 g of a reduced starch sugar were added to 4500 g of water and mixed to obtain a mixture. Next, citric acid was added as a pH adjusting agent to the mixture in an amount (0.39 g) to adjust the pH to 4, and mixed, and water was added to make finaly a total weight of 5000 g to prepare a harmful organism control agent of the present invention. The obtained harmful organism control agent was filled into a hand spray container and stored at 40°C for one month to obtain a sample 17.

### Sample 18

Five (5) g of ZENTARI Water dispersible granule was added to 4995 g of water and mixed to prepare a harmful organism control agent. The pH of the harmful organism control agent was not adjusted, and the pH was 5.4. The obtained harmful organism control agent was filled into a hand spray container and stored at 40°C for one month to obtain a sample 18.

### Evaluation Test Example 2

### Cotton worm (Spodoptera litura)

The insecticidal activity was examined on the cotton worm (Spodoptera litura), an example of Lepidoptera larva.

### (Test Example)

The test results are shown in Table **2.**

In Table **2,** the number of Bacillus thuringiensis fungus in each prepared sample, including the initial number of fungus and the number of fungus after the sample was stored at 40°C for one month, was investigated, and the remaining number was calculated. If the remaining number was 50% or more, it was considered to have been significantly preserved. If 50% or more was remained, it was marked as "○", and if 60% or more was remained, it was marked as "⊚". On the other hand, if less than 50% was remained, it was marked as "×".

As a result of the test, in the case of the sample **9,** an embodiment of the present invention in which the pH was adjusted to **4,** the number of Bacillus thuringiensis fungus remained at more than 60% after storage at 40°C for one month, compared to the initial number of fungus. Also, in the case of the sample 10, an embodiment of the present invention in which the pH was adjusted to 10, the number of Bacillus thuringiensis fungus remained at more than 50% after storage at 40°C for one month, compared to the initial number of fungus. On the other hand, in the case of the sample 11, which was used as a comparative example and had its pH adjusted to 11, the amount was reduced by more than 50%.

The insecticidal activity of each of the samples prepared above against cotton worm (Spodoptera litura) was evaluated.

In a glass greenhouse (unheated), a sufficient amount of the tested formulation prepared above was sprayed from a hand spray container onto the entire cabbage plant. After the formulation was air-dried, the cabbages were placed in plastic containers (11.5 x 11.5 x 6 cm high) and three cotton worm (Spodoptera litura) larvae (middle-aged larvae, approximately 1 cm long) were released per section. After the release, the number of dead insects was investigated. Also, to prevent the escape of the supplied insects, a plastic lid was placed on the container. The lid had 13 breathing holes made of a bottle. To prevent the cabbage from wilting, a water-retaining container (floral tube 1.5 x 4 cm) was inserted into the cabbage stem.

After release, the insects were reared in an incubator (25°C, 14 L, 10 D, humidity 60 ± 5%).

The same test was repeated five times, and the number of dead insects was investigated and evaluated after three days.

From Table 2, it can be seen that when the sample 18, which had not been pH adjusted and had been stored at 40°C for one month, was sprayed, the mortality rate after three days was 86.7%, whereas when the sample 9, as an embodiment of the present invention with a pH adjusted to 4, and the sample 10, as an embodiment of the present invention with a pH adjusted to 10, were sprayed, the mortality rates after three days both exceeded that of the sample 18, which had not been pH adjusted.

In other words, it was found that a harmful organism control agent with BT as an active irrigant could achieve a storage stabilization by adjusting the pH.

### Evaluation Test Example 3

### American white moth (Hyphantria cunea)

The insecticidal efficacy was examined on American white moth (Hyphantria cunea), as an example of Lepidoptera larva.

### (Test Example)

The test results are shown in Table 3.

The insecticidal activity of each of the samples prepared above against American white moth (Hyphantria cunea) was evaluated.

Tested areas were marked on dogwoods outdoors, and a sufficient amount of the tested formulations prepared above was sprayed from a hand spray container onto the dogwoods. After the agent was allowed to air dry, the collected dogwood leaves were placed in a plastic petri dish and five American white moths (larvae, approximately 1 cm long) were released per area. After the release, the number of dead insects was investigated. Also, the plastic petri dish was covered to prevent the escape of the supplied insects. After the release, the insects were reared at room temperature (air conditioner set at 27°C). The same experiment was repeated three times, and the number of dead insects was investigated and evaluated three days later.

As can be seen from Table 3, the mortality rates after three days when the sample 9 as an embodiment of the present invention adjusted to a pH of 4, the sample 12 as an embodiment of the present invention adjusted to a pH of 4, the sample 13 as an embodiment of the present invention adjusted to a pH of 4, the sample 14 as an embodiment of the present invention adjusted to a pH of 4, the sample 16 as an embodiment of the present invention adjusted to a pH of 4, and the Sample 17 as an embodiment of the present invention adjusted to a pH of 4, were sprayed were significantly higher. In other words, it was found that a harmful organism control agent with BT as an active irrigant could achieve a storage stabilization by adjusting the pH.

Table 2 is shown below.

**[Table 2]**

| | Comp. Ex. | Ex. | Ex. | Comp. Ex. | Comp. Ex. |
|---|---|---|---|---|---|
| Samp.No. | 8 | 9 | 10 | 11 | 18 |
| Number of fungus (Remaining number of the case at 40°C after one month against the Initial time case) | | ⊚ | ○ | × | |
| pH/Initial time | 3.0 | 4.0 | 10.0 | 11.0 | 5.4 |
| pH/at 40°C for one month | 3.0 | 4.5 | 5.2 | 7.2 | 4.9 |
| Control effect (mortality rate %) against cotton worm (Spodoptera litura) | 66.7 | 100 | 93.3 | 86.7 | 86.7 |

Table 3 is shown below.

**[Table 3]**

| | Ex. | Ex. | Ex. | Ex. | Ex. | Ex. |
|---|---|---|---|---|---|---|
| Samp.No. | 9 | 12 | 13 | 14 | 16 | 17 |
| Control effect (mortality rate %) against American white moth (Hyphantria cunea) | 73.3 | 66.7 | 100 | 80 | 86.7 | 80 |

### INDUSTRIAL APPLICABILITY

Since the stabilized harmful organism control agent of the present invention is diluted in advance with water to a prescribed concentration range (especially a spray concentration range), and the harmful organism control agent having improved storage stability, it can be conventionally used as the harmful organism control agent.

## Claims

1. A stabilized harmful organism control agent which comprises
Bacillus bacteria,
a pH adjusting agent, and
water,
wherein a pH of the agent is adjusted.

2. The stabilized harmful organism control agent according to claim **1,** which consists of
Bacillus bacteria,
a pH adjusting agent, and
water.

3. The stabilized harmful organism control agent according to claim 1 or 2, wherein the pH of the agent is adjusted to a range of 4 or more to 10 or less.

4. The stabilized harmful organism control agent according to claim 1, which further comprises one or more non-ionic surfactants selected from the group consisting of polyoxyethylene hydrogenated castor oil ether, sorbitan fatty acid ester, and polyether-modified silicone.

5. The stabilized harmful organism control agent according to claim 1, which further comprises one or more ingredients of a reduced starch sugar.

6. The stabilized harmful organism control agent according to claim 1, which further comprises one or more the non-ionic surfactants selected from the group consisting of polyoxyethylene hydrogenated castor oil ether, sorbitan fatty acid ester, and polyether-modified silicone, and one or more ingredients of the reduced starch sugar.

7. The stabilized harmful organism control agent according to claim 1, wherein Bacillus bacteria are within a range of 1.36 × 10⁶ CFU/g or more to 1.36 × 10⁹ CFU/g or less, relative to a total amount of the stabilized harmful organism control agent.

8. The stabilized harmful organism control agent according to claim 1, wherein Bacillus bacteria are within a range of 0.001 % by mass or more to 1.0 % by mass or less, relative to a total amount of the stabilized harmful organism control agent.

9. The stabilized harmful organism control agent according to claim 1, wherein the Bacillus bacteria are BT (Bacillus thuringiensis).

10. The stabilized harmful organism control agent according to claim 1, wherein the harmful organism is Lepidoptera larva.

11. The stabilized harmful organism control agent according to claim 1, wherein the reduction ratio of the control effect after the storage at 40°C for one month is 50% or less.

12. The stabilized harmful organism control agent according to claim 1, which is sprayed without diluting it.

13. A method for controlling a harmful organism, which comprises applying the stabilized harmful organism control agent according to claim 1 filled in a hand spray container via spraying from a hand spray container to a plant or a harmful organism.

14. A method for stabilizing a harmful organism control agent which comprises an adjusting a pH of an agent to a range of 4 or more to 10 or less by adding a pH adjusting agent to the harmful organism control agent comprising Bacillus bacteria and water.

15. The stabilized harmful organism control agent according to claim 1 which comprises one or more ingredients selected from Group (a) and Group (b):
Group (a): a group consisting of insecticidal ingredients, miticidal ingredients, and nematicidal ingredients; and
Group (b): fungicidal ingredients.

16. A method for controlling a harmful organism which comprises applying an effective amount of the stabilized harmful organism control agent according to claim 1 to a harmful organism or a habitat where the harmful organism lives.

17. A seed or vegetative reproductive organ carrying an effective amount of the stabilized harmful organism control agent according to claim 1.
